# EUROPÄISCHE PATENTSCHRIFT

(11) **EP 1 889 113 B1**
(45) Veröffentlichungstag und Bekanntmachung des Hinweises auf die Patenterteilung: **01.05.2013**
(21) Anmeldenummer: 06753924.7
(22) Anmeldetag: 26.05.2006
(51) Int. Cl.: G02B 27/01

(54) **SYSTEM MIT ELEKTRONISCHER TAG- UND NACHTSICHTBRILLE**
SYSTEM HAVING DAY AND NIGHT VISION SPECTACLES
SYSTEME AVEC DES LUNETTES ELECTRONIQUES DE VISION DIURNE ET NOCTURNE

(30) Priorität: 30.05.2005 DE 102005024675
(43) Veröffentlichungstag der Anmeldung: 20.02.2008
(73) Patentinhaber: Durner, Andreas, 86609 Donauwörth (DE)
(72) Erfinder: DRAHEIM, Andre, R., A-9300 St. Veit a. d. Glan (AT)
(74) Vertreter: Puschmann, Heinz H.
(86) Internationale Anmeldenummer: PCT/EP2006/005069
(87) Internationale Veröffentlichungsnummer: WO 2006/128648

(56) Entgegenhaltungen:
- EP-A- 0 592 318
- EP-A- 0 691 559
- EP-A- 1 300 716
- EP-A- 1 326 120
- WO-A-85/04961
- WO-A-2005/054925
- DE-A- 3 806 940
- DE-C2- 19 724 140
- US-A- 5 106 179
- US-A- 5 200 827
- US-A- 5 359 675
- US-A- 6 046 712
- US-A1- 2002 080 094
- US-A1- 2002 101 568
- US-A1- 2002 163 486
- US-B1- 6 349 001
- REICHLEN B A ED - INSTITUTE OF ELECTRICAL AND ELECTRONICS ENGINEERS: "SPARCCHAIR: A ONE HUNDRED MILLION PIXEL DISPLAY" 18. September 1993 (1993-09-18), PROCEEDINGS OF THE VIRTUAL REALITY ANNUAL INTERNATIONAL SYMPOSIUM. SEATTLE, SEPT. 18 - 22, 1993, NEW YORK, IEEE, US, PAGE(S) 300-307 , XP000457701 Seite 304,305; absatz 2.5 : "X Window System Modifications"

## Beschreibung

Die Erfindung betrifft eine elektronische Tag- und Nachtsichtbrille gemäß der im Oberbegriff des Anspruches 1 angegebenen Art.

Für polizeiliche Überwachungszwecke, für militärische Operationen, aber auch für den Sport- und Freizeitbereich besteht ein zunehmendes Bedürfnis an elektronischen Brillen, insbesondere Nachtsichtbrillen. Dabei besteht die Forderung nach einfacher Handhabbarkeit, geringem Gewicht und der Einsetzbarkeit auch bei starker Änderung der Lichtintensität des zu beobachtenden Bereichs. Mit Nachtsichtbrillen sollen Tätigkeiten wie tagsüber ohne Verwendung zusätzlicher Lichtquellen durchgeführt werden.

Aus der US 63 49 001 B1 ist eine Tagsichtbrille bekannt, bei der Daten in des Sichtfeld der Brille eingespielt werden können. Es handelt sich um eine normale Brille mit Brillengläsern, wobei die Brillengläser auch als Display gestaltet sind. In das Brillengestell ist eine Kamera eingebaut, um Aufnahmen ohne Kenntnisnahme durch Andere durchführen zu können.

In der US 2002 01 63 486 A1 ist eine Displaybrille offenbart, welche jedem Auge zugeordnete kleine Bildschirme mit einer Wiedergabeoptik aufweist. Die Bildschirme geben Bilder einer externen Datenquelle wieder.

Die US 2002 01 01 568 A1 offenbart ein Informationssystem mit einer Brille, welche die Augenbewegung erfasst und in Korrelation mit anderen Daten bringt.

Aus der US 52 00 827 B ist eine Displaysystem bekannt, das an einem Helm oder in eine Brille integriert wird. Über das Displaysystem können externe Daten eingespielt und dargestellt werden.

In der EP 1 300 716 A1 ist ebenfalls ein Displaysystem dargestellt, das oberhalb des normalen Sichtbereiches angeordnet ist. Das Auge muss hierbei ständig die Fokussierung ändern, wenn es den normalen Sichtbereich beobachten als auch die Informationen des Displays verfolgen will.

Des Weiteren ist beispielsweise eine Nachtsichtbrille aus der DE 38 06 940 A1 bekannt. Bei einer derartigen Nachtsichtbrille wird das durch das Mondlicht oder das Sternenlicht vorhandene Restlicht durch einen Bildwandler verstärkt. Diese Nachtsichtbrille umfasst dabei für jedes Auge eine Aufnahmeoptik, einen Bildwandler und Anzeigemittel. Die Anzeigemittel sind mit einer Optik versehen, über die das Bild wiedergegeben wird. Der Bildwandler besteht im wesentlichen aus einer Kathodenstrahlröhre, welche die Strahlen des Restlichtes verstärkt und die derart verstärkten Strahlen über die Anzeigemittel und ein Okular wiedergibt.

Derartige Nachtsichtbrillen haben den Nachteil, dass sie eine hohe Betriebsspannung benötigen. Zusammen mit den Batterien und der Katodenstrahlröhre weisen sie ein hohes Gewicht auf. Zudem ist die Bildqualität sehr eingeschränkt. Details können nicht erkannt werden. Des Weiteren ist ihr Einsatzgebiet aufgrund der geringen Empfindlichkeit, bis maximal 0,001 Lux Restlicht ohne Zusatzbeleuchtung, was einer Restlichtverstärkung von 30.000 bis 40.000 entspricht, stark eingeschränkt. Hinzu kommt noch, dass bei einer starken Helligkeitsänderung, beispielsweise durch einen Scheinwerfer, der Benutzer der Brille geblendet und dadurch handlungsunfähig wird.

Des Weiteren ist aus der DE 197 24 140 C2 eine gattungsgemäße elektrische Brille, insbesondere Nachtsichtbrille, bekannt, die eine elektronische Aufnahmekamera mit einer Aufnahmeoptik und einem CCD-Sensor umfasst. Zudem weist diese elektrische Brille eine Bildverarbeitungseinheit auf, welche das von der Aufnahmekamera aufgenommene Bild verarbeitet und ein Ausgangssignal für ein jedem Auge zugeordnetes Anzeigemittel mit einer Wiedergabeoptik zur Wiedergabe des Bildes zur Verfügung stellt. Diese Brille wird jedoch immer im Zusammenhang mit einer Infrarotlichtquelle betrieben, um die Nachtsichteigenschaften der Nachtsichtbrille zu verbessern. Hierfür wir die Infrarotlichtquelle gepulst, um einen möglichst hohen Wirkungsgrad und geringen Stromverbrauch zu erzielen. Zudem ist ein Sensor vorgesehen, der in Abhängigkeit des Restlichtes die Intensität des Infrarotlichtes steuert.

Diese Ausführungsform leidet unter dem relativ hohen Stromverbrauch, was zu einem großen Batteriebedarf mit hohem Gewicht oder einer geringen Einsatzzeit führt. Zudem ist es nachteilig, insbesondere im militärischen Kampfeinsatz in der Nacht, dass der Benutzer dieser Nachtsichtbrille durch das Infrarotlicht für den Gegner leicht mit Hilfe einer entsprechenden Brille erkennbar ist. Hierdurch wird der Benutzer zu einem leicht ermittelbarem Ziel und unterliegt daher einer hohen Gefährdung.

Hinzu kommt noch, dass bei allen bekannten Brillen das Problem besteht, dass eine exakte Darstellung der betrachteten Umgebung nicht erfolgt. Der Benutzer hat daher größte Schwierigkeiten sich zu orientieren und sich im Gelände mit einer derartigen Brille in der Nacht zu bewegen. Exakte Entfernungsschätzung und ein räumliches Sehen ist mit den bekannten elektrischen Brillen nicht oder zumindest nur äußerst eingeschränkt möglich.

Von dem Anmelder ist die nicht vorveröffentlichte Anmeldung PCT/EP2004/013581 eingereicht worden, wonach die Aufnahmekamera, die Anzeigemittel und die Wiedergabeoptik so aufeinander abgestimmt sind, dass das von dem Benutzer bei Gebrauch erfassbare Bild im Hinblick auf die dargestellten Dimensionen den realen Verhältnissen bei uneingeschränktem direktem Blick des Benutzers entspricht. Hierdurch ist es möglich, dass der Benutzer auch komplizierte Handgriffe bei Nutzung der Brille ausführen kann, da dass von ihm erkannte Bild den realen Dimensionen und Verhältnissen entspricht. Zudem entsteht der Effekt zumindest eines virtuellen räumlichen Bildes, sodass auch eine Orientierung und Entfernungsschätzung einfacher wird.

Das Sichtfeld ist jedoch durch die Aufnahmemöglichkeiten der Aufnahmekamera eingeschränkt. Es besteht aber ein zunehmendes Bedürfnis, zusätzliche Räume durch Beobachtung, beispielsweise des rückwärtigen Raumes, aber auch von bestimmten entfernten Orten zu erschließen. Diese zusätzlichen Informationen dienen vor allem der Sicherheit des Benutzers, beispielsweise eines Soldaten im Kampfeinsatz, oder als Entscheidungshilfe für die weitere Vorgehensweise des Benutzers.

Der Erfindung liegt daher die Aufgabe zugrunde, eine elektrische Brille gemäß der im Oberbegriff des Anspruches 1 angegebenen Art, derart weiter zu bilden, dass unter Vermeidung der genannten Nachteile sich für unterschiedlichste Einsatzgebiete zusätzliche Beobachtungs- und Anwendungsmöglichkeiten bei Tag und Nacht ergeben.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Nach der Erfindung ist die gattungsmäßige elektronische Brille zumindest mit einer Sende- und/oder Empfangsschnittstelle versehen ist, die mit einer weiteren, von der Brille separaten Kamera signaltechnisch verbunden ist, welche mit einem digitalen Bildsensor, insbesondere einem CCD- oder CMOS-Sensor, versehen ist, wobei über die Schnittstelle die Bildsignale der weiteren Kamera dem Anzeigemittel zur Wiedergabe des Bildes der weiteren Kamera zur Verfügung stellt. Die signaltechnische Verbindung kann dabei mittels Kabel oder durch Funkübertragung kabellos erfolgen, wie weiter unten noch beschrieben wird.

Vorzugsweise ist dabei ein erster Wahlschalter vorgesehen ist, durch den die Bildsignale wahlweise der Aufnahmekamera und/oder der weiteren Kamera dem Anzeigemittel zur Wiedergabe des Bildes zur Verfügung gestellt werden. Dabei kann der erste Wahlschalter manuell oder automatisch betätigbar ausgebildet und auch ausschließlich an der weiteren Kamera angeordnet sein. Auf der einen Seite kann der Benutzer entscheiden, welche Bildinformationen von welcher Kamera auf den Anzeigemitteln erscheinen. Auf der anderen Seite kann bei Aktivierung einer Kamera durch eine Prioritätenschaltung die Bildinformation bevorzugt auf den Anzeigemitteln erscheinen.

Gemäß einer Ausführungsform der Erfindung weist die weitere Kamera erste Sende- und Empfangsmittel und die Schnittstelle zweite Sende- und Empfangsmittel zum kabellosen Übertragen von Signalen zwischen der weiteren Kamera und der Brille auf.

Um beispielsweise bei einer Beobachtung des Benutzers der elektronischen Brille nach vorne auch den rückwärtigen Raum kontrollieren zu können, sind insbesondere Mittel zum Befestigen der weiteren Kamera am Körper des Benutzers vorgesehen. Hierdurch kann beispielsweise die weitere Kamera an einem Helm des Benutzers nach hinten gerichtet befestigt werden und dieser kann sowohl den Raum nach vorne über die Aufnahmekamera als auch nach hinten über die weitere Kamera beobachten.

Vorzugsweise sind dabei die Bildsignale der Aufnahmekamera und/oder der weiteren Kamera über einen elektronischen Videosignaldetektor mit Erkennungseinrichtung geführt, der die eingespeiste Signalart automatisch erkennt und auf die Bildverarbeitungseinheit der Aufnahmekamera, auf eine Bildverarbeitungseinheit der weiteren Kamera und auf die Anzeigeeinheiten aufschaltet.

Beispielsweise kann es erforderlich sein, dass immer, wenn die weitere oder die Aufnahmekamera Bildsignale liefert, diese zu den Anzeigemitteln übertragen wird. Hierfür ist eine Prioritätenschaltung vorgesehen. Auch ist es denkbar, dass die weitere Kamera mit einem Sensor zusammenwirkt, der die weitere Kamera aktiviert. Wenn dies der Fall ist, können die Bildsignale bei entsprechender Stellung des ersten Wahlschalters automatisch aufgeschaltet werden.

Vor allem ist dafür auch die Kamera mit einem Aktivierungsschalter versehen, der mit einem Sensor, beispielsweise einem Bewegungssensor, signaltechnisch verbunden ist und ein Aktivieren der weiteren Kamera bei Ansprechen des Sensors bewirkt. Bewegt sich dann beispielsweise im rückwärtigen zu beobachtenden Raum jemand, wird die weitere Kamera aktiviert und die Bildinformation bei entsprechender Stellung des Wahlschalters aufgeschaltet.

Gemäß einer Ausführungsform der Erfindung ist die weitere Kamera mit einer Bildverarbeitungseinheit versehen, mittels der das von dem Benutzer bei Gebrauch erfassbare Bild in Echtzeit dargestellt wird. Dabei wird das Bildsignal nach dem digitalen Bildsensor, einem digitalen Filter und einem sich daran anschließenden Digital/Analog-Wandler bis zur Endverarbeitung im Displays im wesentlichen mit analoger Technik und als analoges Bildsignal geführt. Dieser Ausführungsform liegt dabei die Erkenntnis zugrunde, dass analoge Bildsignalführung und analoge Technik erheblich schneller ist, als die Digitale in Bezug auf die zu übertragende Bandbreite des Signals. Hierdurch kann dann das Bild in Echtzeit ohne Laufzeitverzögerung und Verschiebung der Phasenlage zum Betrachter gelangen, d.h. der Betrachter nimmt keinen Unterschied zur realen Darstellung wahr.

Weiterhin ist insbesondere auch die Optik der Aufnahmekamera, die Anzeigemittel und die Wiedergabeoptik so aufeinander abgestimmt sind, dass das von dem Benutzer bei Gebrauch erfassbare Bild im Hinblick auf die dargestellten Dimensionen den realen Verhältnissen bei uneingeschränkten Blick des Benutzers 1 zu 1 entspricht.

Dabei kann die Aufnahmekamera und ihre Bildverarbeitungseinheit so ausgelegt sein, dass das von dem Benutzer bei Gebrauch erfassbare Bild in Echtzeit dargestellt wird. Hierdurch wird sich nicht nur durch die Art der Darstellung sondern auch durch die Geschwindigkeit der Darstellung der Realität zumindest weitestgehend angenähert.

Vorzugsweise sind dafür die Mittelachse der Anzeigemittel, die optische Achse der Wiedergabeoptik und die jeweils zugeordneten Augachsen des Benutzers in einer Grundposition der Augen des Benutzers - gerader Blick nach vorne - konzentrisch zueinander ausgerichtet. Hierdurch wird erreicht, dass mit einfachem Aufwand das Bild den realen Größenverhältnissen entspricht.

Um insbesondere Sehschwächen ausgleichen zu können ist die jeweilige Wiedergabeoptik des Anzeigemittels relativ zum Anzeigemittel entlang der optischen Achse verstellbar ausgebildet. Insbesondere ist die Verstellbarkeit unabhängig von der Verstellbarkeit der Wiedergabeoptik des anderen Anzeigemittels ausgebildet. Eine scharfe Wiedergabe für den Benutzer auf beiden Augen wird dadurch gewährleistet und individuelle Sehschwächen ausgeglichen.

Um das räumliche Sehen zu optimieren, sind zwei Aufnahmekameras sowie zwei Bildverarbeitungseinheiten für jedes Anzeigemittel vorgesehen, welche hinsichtlich der Verarbeitungsschritte zeitlich synchronisiert sind. Vorzugsweise sind dabei die optischen Achsen der Aufnahmekamera mit den Augachsen des Benutzers in der Grundposition konzentrisch. Mit einfachen Mitteln wird hierdurch die exakte räumliche Wiedergabe erreicht.

Gemäß einer Ausführungsform der Erfindung sind die Anzeigemittel in einem festen Träger angeordnet und seitlich zur Ausrichtung mit den Augachsen verschiebbar in dem Träger gelagert, wobei der Träger fest in einem Brillengestell angeordnet ist. Dadurch wird erreicht, dass das Bild entsprechend der Realität und im entsprechenden Größenverhältnis wiedergegeben wird und nicht durch Verschiebung der Bauteile zueinander innerhalb der Anordnung verzerrt wird.

Daher sind auch die Aufnahmeoptik und die Bildverarbeitungseinheit in dem Träger angeordnet, sodass der feste Träger eine vorbestimmte Zuordnung aller auf dem Träger angeordneten Teile zu einander gewährleistet.

Für eine möglichst realistische Darstellung des Bildes sind die vorgenannten optischen Merkmale von Vorteil, aber auch die folgenden, die Elektronik betreffenden, Merkmale führen zu einer Verbesserung einer realistischeren Darstellung.

Um auch im Nachtsichtbereich eine gute Bildqualität zu erhalten, weist die Aufnahmekamera einen CCD-Sensor oder CMOS-Sensor für den Nachtsichtbereich mit einer Empfindlichkeit für eine Wellenlänge von 380, insbesondere 500, bis 1200 nm auf. Hierdurch wird der Einsatzbereich erheblich erweitert, insbesondere bis in den hohen Infrarotbereich.

Gemäß einer Ausführungsform der Erfindung ist die Aufnahmekamera für ein Restlicht von kleiner als 0,001 Lux, insbesondere 0,0002 Lux ohne Zusatzausleuchtung ausgelegt.

Zur Verbesserung der Bildqualität ist der CCD-Sensor oder der CMOS-Sensor der Aufnahmekamera und/oder der weiteren Kamera vor allem mit einer Bildauflösung von zumindest 790 x 590 versehen.

Da die Bildqualität bei Schwarz/Weiß-Darstellungen wesentlich höher ist, ist das Anzeigemittel für Schwarz/Weiß-Darstellungen ausgelegt, insbesondere zur Darstellung von 256 Graustufen.

Die Bildqualität kann weiter verbessert werden, indem die Bildverarbeitungseinheit der Aufnahmekamera und/oder der weiteren Kamera eine digitalisierte Verstärkervorstufe aufweist, welche das von der Aufnahmekamera bzw. der weiteren Kamera kommende Signal von Rausch- und Störanteilen befreit, insbesondere im hohen Infrarotbereich - Wellenlänge von 650 bis 1200 nm.

Beispielsweise ist dabei der Verstärkervorstufe ein Digital/Analog-Wandler nachgeschaltet, so dass das Signal danach als Analogsignal mit einem Normpegel von 1 Vss (Voltspitze - Spitze = Videonormpegel) weiterverarbeitbar ist.

Dabei weist vorzugsweise die Bildverarbeitungseinheit der Aufnahmekamera und/oder der weiteren Kamera zwei in Reihe geschaltete analoge Verstärkerstufen und eine Schaltung für eine Steuerspannung auf, welche die Verstärkerstufen bei Auslesen jedes Bildpixels - beispielsweise zeilenweise - aus dem CCD-Sensor oder CMOS-Sensor der Aufnahmekamera bzw. der weiteren Kamera auf "Null" eicht (DC-Off), um eine saubere Signalverarbeitung und Auslesung der Bildinformation zu gewährleisten. Hierbei werden die Rauschanteile weiter unterdrückt.

Die Verstärkerstufen sind dabei mit einer Signalverstärkung von mehr als 25 Dezibel, insbesondere 52 Dezibel, gegenüber dem Normpegel versehen.

Des Weiteren ist es von Vorteil, wenn die Verstärkerstufen eine externe Beschaltung aufweisen, welche in ihrer Auslegung und Skalierung dem Signalverlauf der Verstärkung und der Übertragung für Bildinformationen im schwarz-weiß Bereich optimiert sind.

Den Verstärkerstufen ist insbesondere eine Regelung für den Bereich von 5 bis 52 Dezibel zugeordnet, welche bei schneller Helligkeitsänderung der Umgebung die Verstärker so aussteuern, dass keine merkliche Überbelichtung des Bildes auftritt. Insbesondere ist die Regelung dabei manuell zuschaltbar ausgebildet.

Hierdurch wird gewährleistet, dass bei allen Lichtverhältnissen die uneingeschränkte Sicht erhalten bleibt. Zudem kann es für bestimmte Einsatzgebiete von Vorteil sein, diese Regelung auszuschalten, damit der Benutzer die Änderung der Lichtverhältnisse mitbekommt.

Gemäß einer Ausführungsform der Erfindung ist den Verstärkerstufen eine manuell betätigbare Steuerung zugeordnet, über welche die Empfindlichkeit der Verstärker durch den Benutzer eingestellt wird. Dadurch wird eine Anpassung an die Lichtverhältnisse und/oder an den jeweiligen Einsatzzweck durch den Benutzer ermöglicht.

Vorzugsweise enthalten die Verstärkerstufen eine Sample und Hold-Schaltung über einen Feldeffekttransistor zur Klemmung des Videosignals (Clamp), die in Abhängigkeit des ankommenden Signals zeitabhängig gesteuert werden, um eine hohe Empfindlichkeit und Harmonie der Verstärkerstufen zu erreichen.

Zur Verbesserung der Bildqualität wird das Bildrauschen und die Falschfarbanteile dadurch zumindest unterdrückt oder beseitigt, wenn dem Digital/Analog-Wandler mindestens zwei aktive Signalfilter in Form eines Bandpassfilters nachgeschaltet sind.

Dabei sind insbesondere den aktiven Signalfiltern eine Signalpufferstufe mit einer Verstärkung, insbesondere von mehr als zwei, gegenüber dem Normalpegel nachgeschaltet, damit Verluste aus der vorangegangenen Signalverarbeitung und Signalführung kompensiert und ausgeglichen werden.

Gemäß einer Ausführungsform der Erfindung ist den Anzeigemitteln ein Bandpassfilter und eine Signalweiche zur Impedanzanpassung vorgeschaltet, um eine verlustfreie Anpassung an die nachfolgende Displayelektronik zu gewährleisten.

Die Signalweiche wirkt dabei insbesondere mit einer Signalverarbeitung zusammen, die Phasengleichheit und Synchronität der dargestellten Bilder in den Anzeigemitteln ermöglicht.

Das Anzeigemittel wird vorzugsweise durch einen AMLCD-Bildschirm oder einen FLLCD-Bildschirm gebildet.

Die elektronische Brille ist mit einer unabhängigen Spannungsquelle verbunden, insbesondere einer Batterie oder einen Akkumulator, um ortsunabhängig agieren zu können.

Vorzugsweise ist die Batterie bzw. der Akkumulator dabei in einem, insbesondere separaten, Batteriegehäuse angeordnet, das am Körper eines Benutzers über Halteeinrichtungen befestigbar ausgebildet ist.

Gemäß einer Ausführungsform der Erfindung weist das Anzeigmittel eine On-Screen-Daten-Anzeige (Videoeinblendung) für im Hinblick auf das wiedergegebene Bild zusätzliche Informationen auf. Beispielsweise können Informationen über den Auftrag des Benutzers, die erkennbare Gegend, Betriebsdaten der Elektronik, anwenderspezifische Daten von Extern und ähnliches eingeblendet werden.

Insbesondere ist auch eine Sende- und/oder Empfangsschnittstelle vorgesehen, mit der die vom Benutzer sichtbaren Bilder übertragen werden können. Hierdurch ist es möglich, dass beispielsweise in einem Befehlsstand, der Führungsoffizier des Benutzers auch die Bilder des Benutzers erhält und entsprechende Weisungen ausgeben kann, die über die On-Screen-Anzeige dem Benutzer zur Kenntnis gelangen.

Insbesondere bei Verwendung in der Nacht ist die Ausbildung von Vorteil, wenn beim betriebsgemäßen Gebrauch der Brille kein sichtbares oder unsichtbares Licht von außen detektierbar ist. Hierdurch kann der Nutzer der Brille insbesondere auch von Infrarotsensoren unerkannt bleiben und sich trotzdem in der Dunkelheit sicher zurecht finden.

Um die Lichtundurchlässigkeit auf einfache Weise zu ermöglichen, ist ein Brillengestell mit Abdichtmitteln vorgesehen, welche die Brille beim betriebsgemäßen Tragen am Kopf des Benutzers so abdichtet, dass kein Licht zwischen dem Kopf des Benutzers und der Brille nach außen dringen kann. Vor allem sind dann die Abdichtmittel durch auswechselbare Polster gebildet.

Damit eine schnelle Anpassung an unterschiedliche Kopfformen auf einfache Weise erfolgen kann, steht ein Satz unterschiedlicher Polster zur Verfügung, welche entsprechend der Kopfform des Benutzers an dem Brillengestell angebracht werden können.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung zeigen:
- Fig. 1: eine perspektivische Darstellung einer Tag-und Nachtsichtbrille von seitlich oben hinten;
- Fig. 2: eine perspektivische Darstellung der Tag- und Nachtsichtbrille von Fig. 1 von vorne;
- Fig. 3: eine perspektivische Darstellung des Einsatzes der Tag- und Nachtsichtbrille von Fig. 2, jedoch ohne Außenwandung;
- Fig. 4: eine perspektivische Darstellung des Einsatzes der Tag- und Nachtsichtbrillevon Fig. 1, jedoch ohne Rückwandung;
- Fig. 5: eine perspektivische Darstellung eines Details von Fig. 4, das die Verstellbarkeit der Wiedergabeoptik und der Anzeige zeigt;

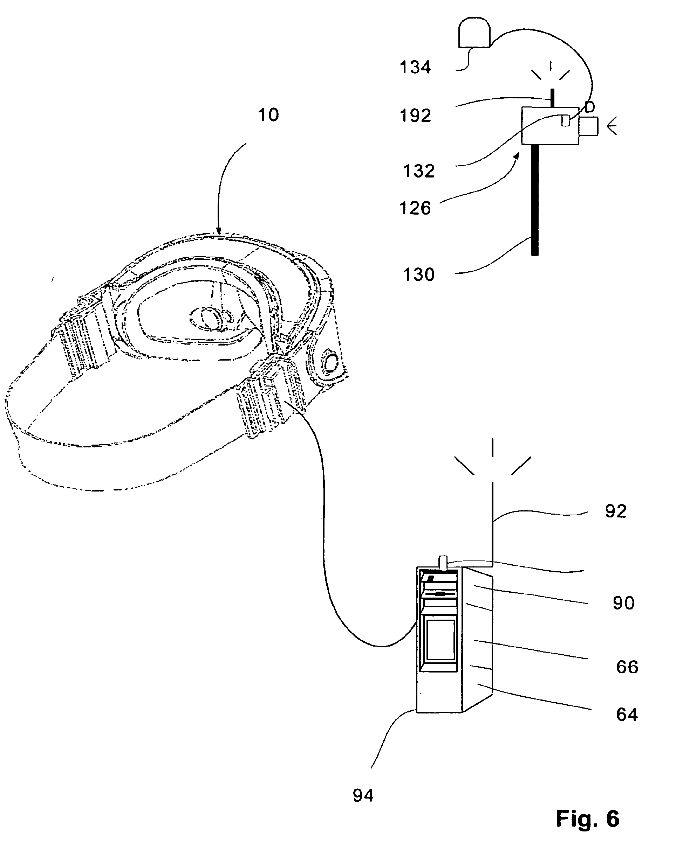

- Fig. 6: eine schematische Darstellung der Tag- und Nachtsichtbrille mit einer weiteren Kamera nach einer Ausführungsform der Erfindung, und
- Fig. 7: ein schematisches Blockschaltbild, das die Signalverarbeitung zeigt.

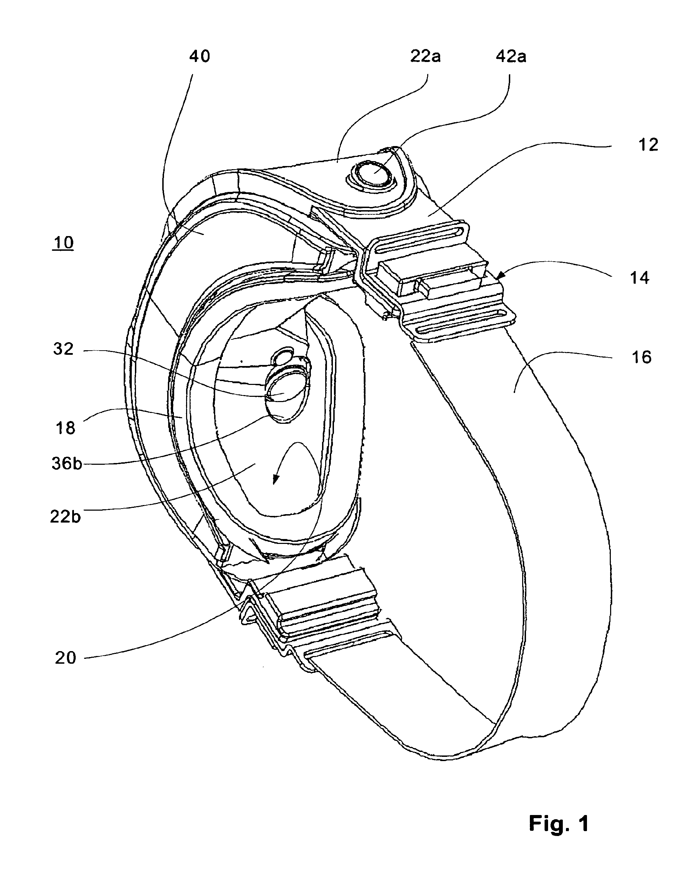

In den Figuren 1 bis 4 sind in unterschiedlichen Darstellungen eine Tag- und Nachtsichtbrille 10 dargestellt. Die Tag- und Nachtsichtbrille 10 besteht aus einem Brillengestell 12, an das über einen Verschluss 14 ein Befestigungsriemen 16 angreift. Das Brillengestell 12 ist in der Art einer Schutz/Skibrille ausgebildet und weist an seiner den Kopf des Benutzers zugewandten Seite Polsterungen 18 auf. Die Polsterungen 18 schließen die Tag- und Nachtsichtbrille 10 beim betriebsgemäßen Gebrauch so dicht am Kopf des Benutzers ab, dass kein sichtbares oder unsichtbares Licht von außen detektierbar ist. Hierdurch kann der Benutzer der Tag- und Nachtsichtbrille 10 insbesondere auch von Infrarotsensoren unerkannt bleiben und sich trotzdem in der Dunkelheit sicher zurecht finden.

Die Polsterungen 18 sind lösbar ausgebildet. Damit eine schnelle Anpassung an unterschiedliche Kopfformen der Benutzer der Tag- und Nachtsichtbrille 10 auf einfache Weise erfolgen kann, steht ein Satz unterschiedlicher Polsterungen 18 zur Verfügung, welche entsprechend der Kopfform des Benutzers an dem Brillengestell angebracht werden können. Zudem ist die ganze Tag- und Nachtsichtbrille 10 lichtundurchlässig ausgebildet.

In dem Brillengestell 12 ist ein Einsatz 20 eingebracht, der an seiner dem Kopf des Benutzers abgewandten Seite mit einer Schutzwand 22a und seiner dem Kopf des Benutzers zugewandten Seite mit einer Schutzwand 22b abgedeckt ist. Der Einsatz 20 ist fest in dem Brillengestell 12 angeordnet.

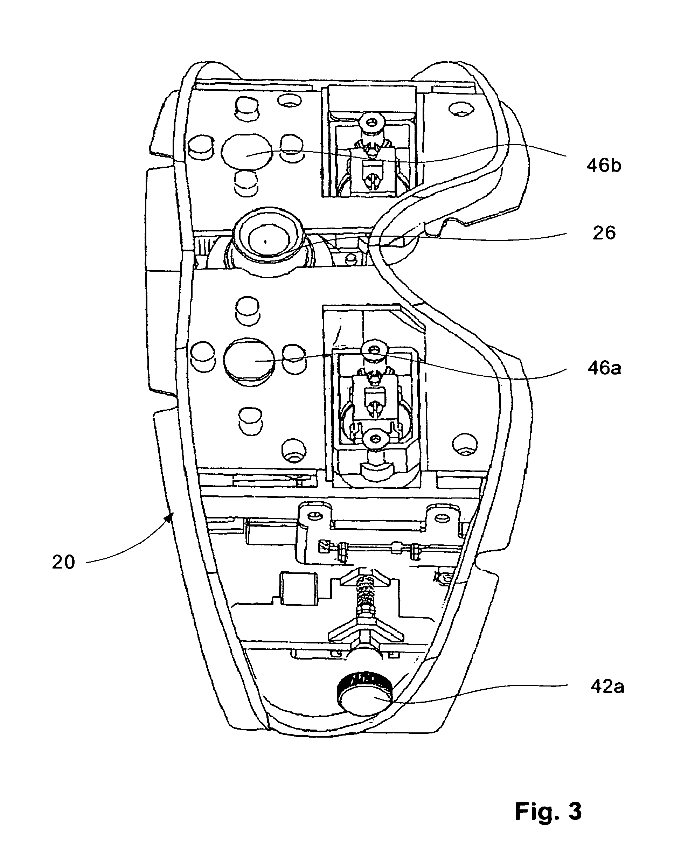

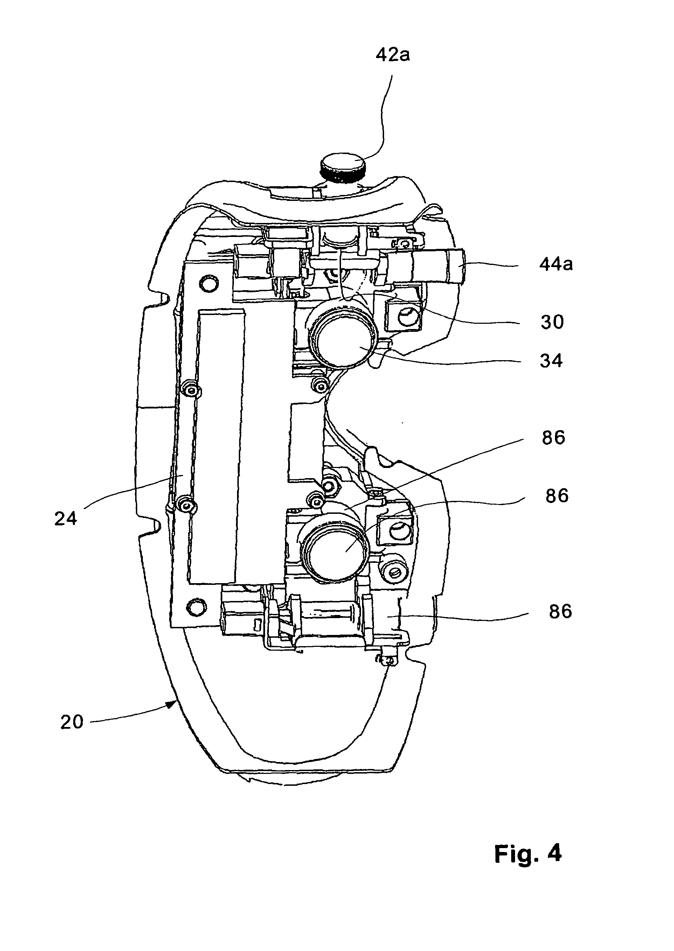

Der Einsatz 20 ist im Einzelnen den Figuren 3 und 4 zu entnehmen und ist mit einer Tragplatte 24 versehen, auf der alle optischen und elektrischen Bauteile fest angeordnet sind.

Auf der Tragplatte 24 ist eine Aufnahmekamera 26 sowie zwei Displays 28 - links - und 30 - rechts - angeordnet. Zudem ist jeweils eine Widergabeoptik 32 bzw. 34 einem Display 28 oder 30 zugeordnet auf der Tragplatte 24 gelagert.

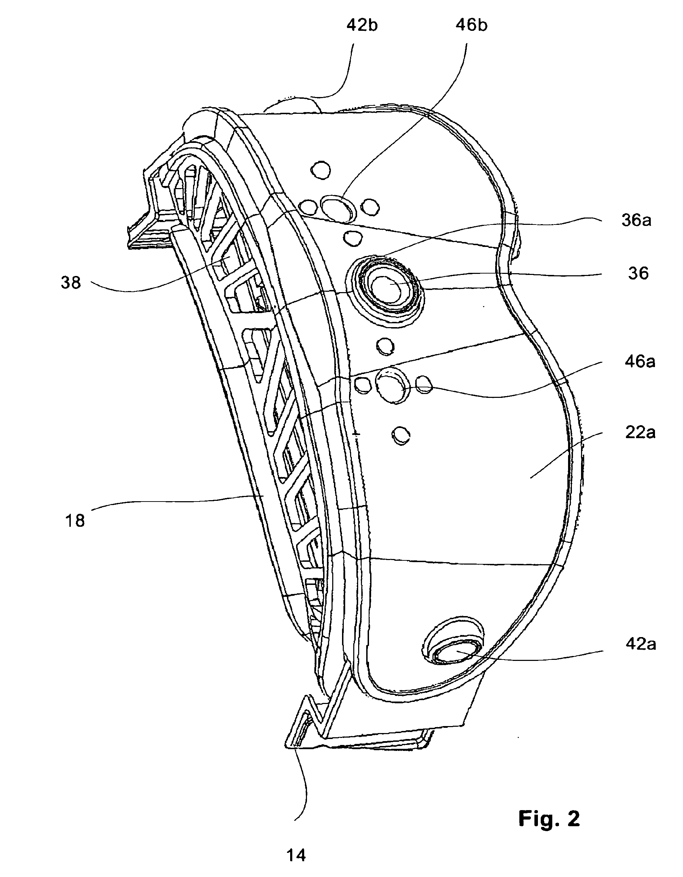

Die Schutzwand 22b weist Aussparungen 36b und 36c für die Wiedergabeoptik und die Schutzwand 22a Aussparungen 36a für Aufnahmekamera 26 auf, siehe Figuren 1 und 2.

An der Oberseite des Brillengestelles 12 sind Lüftungsöffnungen 38 vorgesehen, die durch eine durchlässige Folie 40 abgedeckt sind. Hierdurch wird gewährleistet, dass die durch die Elektronik entwickelte Wärme über die Lüftungsöffnungen 38 und die durchlässige Folie 40 aus dem Inneren der Tag- und Nachtsichtbrille 10 austreten kann.

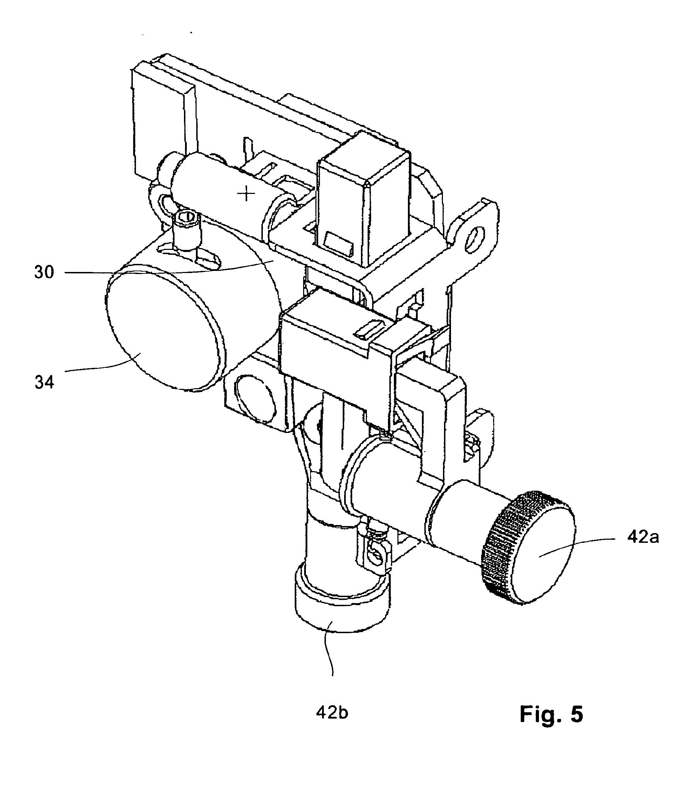

Die Aufnahmekamera 26, die Displays 28 und 30 und die Wiedergabeoptik 32 und 34 sind so aufeinander abgestimmt, dass das vom Benutzer bei Gebrauch erfassbare Bild im Hinblick auf die dargestellten Dimensionen den realen Verhältnissen bei uneingeschränktem direkten Blick des Benutzers entspricht. Hierfür ist die Wiedergabeoptik 32 mit dem Display 28 sowie die Wiedergabeoptik 34 mit dem Display 30 so gekoppelt, dass diese in der Tragplatte 24 miteinander seitlich verschiebbar sind. Über die seitliche Verschiebbarkeit wird der Augachsenabstand, der von Benutzer zu Benutzer unterschiedlich sein kann, so eingestellt, dass die Mittelachse der Displays 28 bzw. 30, die optische Achse der Wiedergabeoptik 32 bzw. 34 und die jeweils zugeordneten Augachsen des Benutzers in einer Grundposition der Augen des Benutzers - gerader Blick nach vorne - konzentrisch zu einander ausgerichtet sind, siehe hierzu auch Fig. 5. Dafür ist eine Einstellvorrichtung 42a und 42b auf jeder Seite des Einsatzes 20 der Tag- und Nachtsichtbrille 10 vorgesehen. Um zudem auch Sehschwächen der einzelnen Augen des Benutzers ausgleichen zu könne, ist eine weitere Einstellvorrichtung 44a und 44b für die entsprechende Wiedergabeoptik 32 bzw. 34 vorgesehen, mittels der die Wiedergabeoptik 32, 34 entlang ihrer optischen Achse relativ zum Display 28, 30 verschiebbar ist. Die Einstellung der Wiedergabeoptik 32 und 34 über die weitere Einstellungsvorrichtung 44a bzw. 44b erfolgt jeweils unabhängig von der Wiedergabeoptik 34 bzw. 32 des anderen Displays 30, 28.

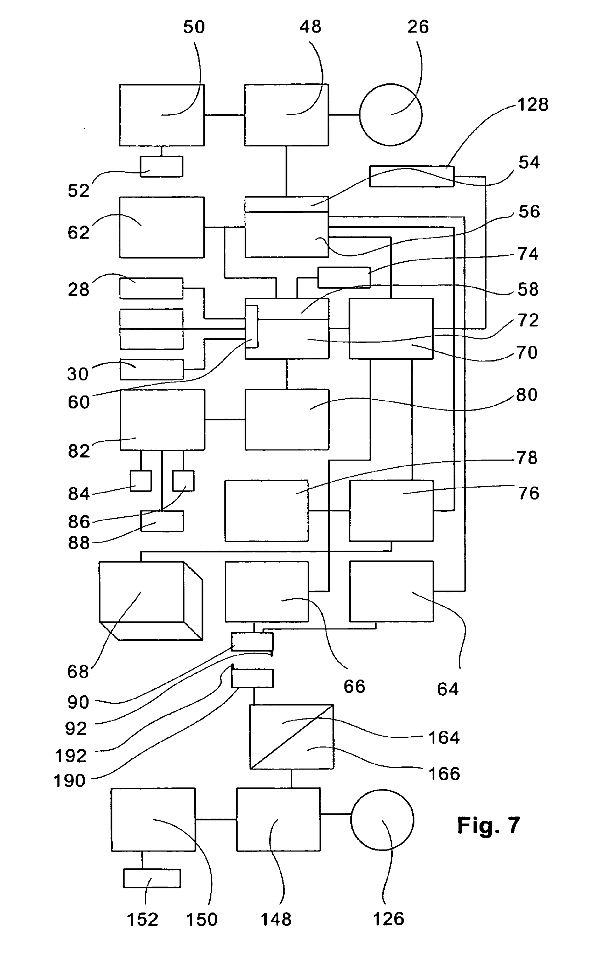

Die Nachtsichtbrille 10 weist des weiteren Restlichtsensoren 46a und 46b auf, die mit einer Regelung zusammenwirken. Hierauf wird weiter unten im Zusammenhang mit Figur 7 noch eingegangen.

Die Tag- und Nachtsichtbrille 10, weist eine Sende- und Empfangsschnittstelle 64 und 66 auf, die mit einer weiteren, von der Tag- und Nachtsichtbrille 10 separaten Kamera 126 signaltechnisch verbunden ist. Im vorliegenden Fall erfolgt die signaltechnische Verbindung im wesentlichen über Funk, wobei die weitere Kamera 126 eine Sendeschnittstelle 164 und eine Empfangsschnittstelle 166 aufweist, die mit ersten Sende-und Empfangsmittel 190 und 192 verbunden ist. Die Schnittstellen 64 und 66 der Tag- und Nachtsichtbrille 10, die in einem separatem Gehäuse 94 integriert sind, sind mit zweiten Sende- und Empfangsmitteln 90 und 92 zum kabellosen Übertragen von Signalen zwischen der weiteren Kamera 126 und der Tag- und Nachtsichtbrille 10 verbunden.

Die weitere Kamera 126 ist ebenfalls mit einem digitalen Bildsensor, nämlich mit einem CCD- oder CMOS-Sensor, versehen, wobei über die Schnittstellen 164, 166 und 66 unf 64 die Bildsignale der weiteren Kamera 126 dem Anzeigemittel 28, 39 der Tag- und Nachtsichtbrille 10 zur Wiedergabe des Bildes der weiteren Kamera zur Verfügung stellt werden.

Am separaten Gehäuse 94 der Tag- und Nachtsichtbrille 10 ist ein erster Wahlschalter 128 angeordnet, durch den die Bildsignale wahlweise der Aufnahmekamera 26 und/oder der weiteren Kamera 126 dem Anzeigemitteln 28, 39 zur Wiedergabe des Bildes zur Verfügung gestellt werden.

Das separate Gehäuse 94 weist auch Batterien oder Akkumulatoren 62 auf und ist an einem Gürtel des Benutzers befestigbar.

Der erste Wahlschalter 128 kann dabei manuell oder automatisch betätigbar ausgebildet sein.

Ein Stecker 130 zum Befestigen der weiteren Kamera 126 am Gürtel oder Helm des Nutzers ist vorgesehen.

Die weitere Kamera 126 ist mit einem Aktivierungsschalter 132 aufweist, der mit einem Bewegungssensor 134 ist.

Die weitere Kamera 126 ist des Weiteren mit einer Bildverarbeitungseinheit 148 versehen ist, mittels der das von dem Benutzer bei Gebrauch erfassbare Bild in Echtzeit dargestellt wird, siehe Figur 7. Die weitere Kamera 126 weist dabei den CCD-Sensor oder einen CMOS-Sensor für den Nachtsichtbereich mit einer Empfindlichkeit für eine Wellenlänge von 500 bis 1200 nm auf und ist für ein Restlicht von kleiner als 0,001 Lux, insbesondere 0,0002 Lux ohne Zusatzbeleuchtung ausgelegt. Der CCD-Sensor bzw. der CMOS-Sensor weist des Weiteren eine Bildauflösung von zumindest 790 x 590 auf.

Die weitere Kamera 126 ist mit einer hier im Einzelnen nicht dargestellten Aufnahmeoptik mit fixen oder verstellbaren Linsen versehen.

Die Bildverarbeitungseinheit 148 wirkt mit einer Verstärkerregelung 150 zusammen, die über ein Bedienelement 152 zu und abschaltbar ist.

Gemäß der Figur 7 arbeitet die Aufnahmekamera 26 mit einer Bildverarbeitungseinheit 48 zusammen. Die Aufnahmekamera 26 und die Bildverarbeitungseinheit 48 sind dabei so ausgelegt, dass das vom Benutzer bei Gebrauch der Tag- und Nachtsichtbrille 10 erfassbare Bild in Echtzeit dargestellt wird. Die Aufnahmekamera 26 weist dabei einen CCD-Sensor oder einen CMOS-Sensor für den Nachtsichtbereich mit einer Empfindlichkeit für eine Wellenlänge von 500 bis 1200 nm auf und ist für ein Restlicht von kleiner als 0,001 Lux, insbesondere 0,0002 Lux ohne Zusatzbeleuchtung ausgelegt. Der CCD-Sensor bzw. der CMOS-Sensor weist des Weiteren eine Bildauflösung von zumindest 790 x 590 auf.

Die Aufnahmekamera 26 ist mit einer hier im Einzelnen nicht dargestellten Aufnahmeoptik mit fixen oder verstellbaren Linsen versehen.

Die Bildverarbeitungseinheit 48 wirkt mit einer Verstärkerregelung 50 zusammen, die über ein Bedienelement 52 zu und abschaltbar ist. Die Bildverarbeitungseinheit 48 ist mit einer digitalisierten Verstärkervorstufe versehen, welche das von der Aufnahmekamera 26 kommende Signal von Rausch- und Störanteilen befreit, insbesondere im vom nahen bis in den hohen Infrarotbereich - Wellenlänge von 650 bis 1200 nm. Der Verstärkervorstufe ist ein Digital/Analog-Wandler nachgeschaltet, sodass das Signal danach als Analogsignal mit einem Normpegel von 1 Vss (Voltspitze - Spitze = PAL - Pegel) weiterverarbeitbar ist. Danach durchläuft das Signal in der Bildverarbeitungseinheit 48 zwei in Reihe geschaltete analoge Verstärkerstufen. Die Verstärkerstufen weisen eine Steuerspannung auf, welche die Verstärkerstufen bei Auslesen jedes Bildpixels - beispielsweise zeilenweise - aus dem CCD-Sensor der Aufnahmekamera 26 auf "Null" eicht, um eine saubere Signalverarbeitung und Auslesung zu gewährleisten. Hierbei werden auch Rauschanteile unterdrückt. Die Verstärkerstufen sind dabei mit einer Signalverstärkung von mehr als 25 Dezibel, insbesondere 52 Dezibel gegenüber dem Normpegel versehen.

Die Verstärkerstufen sind mit einer externen Beschaltung versehen, welche ihrer Auslegung und Skalierung dem Signalverlauf der Verstärkung und Übertragung für Bildinformationen schwarz-weiß optimiert sind. Den Verstärkerstufen ist eine Regelung für den Bereich von 5 bis 52 Dezibel zugeordnet. Diese Regelung wirkt mit den Restlichsensoren 46a und 46b derart zusammen, dass die Verstärkerstufen entsprechend der Intensität des Restlichtes angepasst werden. Der Benutzer erhält dadurch eine unabhängig von den Restlichtverhältnissen gleich gute Bildqualität.

Die Verstärkerstufen enthalten eine Sample und Hold-Schaltung über einen Feldeffekttransistor zur Klemmung des Signals, die in Abhängigkeit des ankommenden Signals zeitabhängig gesteuert werden, um eine hohe Empfindlichkeit und Harmonie der Verstärkerstufen zu erreichen. Der Bildverarbeitungseinheit 48 und somit dem Digital/Analog-Wandler der Bildverarbeitungseinheit 48 sind mindestens zwei aktive Signalfilter in Form eines Bandpassfilters 54 nachgeschaltet, die zur Verbesserung der Bildqualität das Bildrauschen und die Falschfarbanteile zumindest unterdrücken oder beseitigen. Dem aktiven Signalfilter 54 ist eine Signalpufferstufe 56 mit einer Verstärkung, insbesondere von mehr als zwei, gegenüber dem Normalpegel nachgeschaltet, damit Verluste aus der vorangegangenen Signalverarbeitung und Signalführung kompensiert und ausgeglichen werden.

Den Displays 28 und 30 ist ein weiterer Bandpassfilter 58 und eine Signalweiche 60 zur Impedanzanpassung vorgeschaltet, um eine verlustfreie Anpassung an die nachfolgende Displayelektronik zu gewährleisten. Dabei wirkt die Signalweiche 60 mit einer Signalverarbeitung zusammen, die Phasengleichheit und Synchronität der dargestellten Bilder in den Displays 28 und 30 ermöglicht.

Das Display 28, 30 kann dabei ein AMLCD- oder FLLCD-Bildschirm in Flüssigkristalltechnik oder Ferrolyttechnik sein, das für die Darstellungen in schwarz-weiß optimiert ist.

Die Tag- und Nachtsichtbrille 10 ist mit einer Spannungsquelle, nämlich einer Batterie 62 verbunden. Die Batterie 62 ist in einem separaten Batteriegehäuse angeordnet, dass am Körper eines Benutzers befestigbar ist. Derartige Batteriegehäuse sind bekannt, sodass diese im Einzelnen hier nicht beschrieben werden müssen.

Die Tag- und Nachtsichtbrille 10 ist mit einer Sende-schnittstelle 64 und einer Empfangsschnittstelle 66 sowie mit einer seriellen Schnittstelle 68 versehen. Die Sendeschnittstelle 64 wirkt mit der Signalpufferstufe 56 und die Empfangsschnittstelle 66 mit einer weiteren Signalpufferung 70 für Ein- und Ausgänge zusammen.

Die Bildsignale der Aufnahmekamera 26 und der weiteren Kamera 126 sind über einen elektronischen Videosignaldetektor mit Erkennungseinrichtung geführt, der in der Signalpufferstufe 56 integriert ist und die eingespeiste Signalart automatisch erkennt und auf die Bildverarbeitungseinheit 48 der Aufnahmekamera 26, die Bildverarbeitungseinheit 148 der weiteren Kamera 126 und die Anzeigeeinheiten 28, 39 aufschaltet.

Diese Signalpufferung 70 wirkt mit einem Videodriver 72 zusammen, der den Bandpassfilter 58 umfasst. Über ein Bedienelement 74 kann der Kontrast und die Helligkeit des Displays über den Videodriver eingestellt werden.

Über die serielle Schnittstelle 68 können die Daten für eine OSD-Anzeige in den Bildschirmen 28 und 30 eingespielt werden. Hierfür wirkt die serielle Schnittstelle 68 mit einem OSD Textgenerator 76 zusammen. Über einen Kartenleser 78 erfolgt die Identifizierung des Benutzers mit entsprechender Auswahl der OSD-Daten für den zugeordneten Benutzer. Zudem kann ein OSD-Datengenerator 80 für die interne Dateneinblendung vorgesehen sein, der mit einer entsprechender Messdatenerfassung und entsprechenden Sensoren 84, 86 und 88 zusammen wirkt. Hierbei kann es sich um Sensoren für die Batteriespannung, einen Lichtsensor, einen Gassensor, eine Zeiterfassung und ähnliches handeln.

Die Batterieüberwachung mit einem entsprechenden Sensor 84 kann zudem aus zwei Leuchtdioden bestehen, einer als Betriebsüberwachung mit Helligkeitssteuerung, die andere als Überspannungsdetektor mit Warnsignal. Optional kann auch ein akustischer Warnsummer vorgesehen sein. Die serielle Schnittstelle 68 kann mit einem GPS-System, einem Wireless-Lan-System und ähnliches zusammen wirken.

Die Tag- und Nachtsichtbrille 10 mit der weiteren Kamera 126 gemäß der Erfindung erweitert die Sichtmöglichkeit bei Dunkelheit. Die Erfindung zeichnet sich durch ihre einfache Konstruktion und ihrer realistischen und erweiterten Darstellung des Beobachtungsbereiches durch das Bild aus.

### Bezugszeichenliste

- 10: Tag- und Nachtsichtbrille
- 12: Brillengestell
- 14: Verschluss
- 16: Befestigungsriemen
- 18: Polsterungen
- 20: Einsatz
- 22a: Schutzwand - vorne
- 22b: Schutzwand - hinten
- 24: Tragplatte
- 26: Aufnahmekamera
- 28: Display - links
- 30: Display - rechts
- 32: Wiedergabeoptik - links
- 34: Wiedergabeoptik - rechts
- 36a: Aussparung für die Aufnahmekamera
- 36b: Aussparung für die Wiedergabeoptik - links
- 36c: Aussparung für die Wiedergabeoptik - rechts
- 38: Lüftungsöffnungen
- 40: durchlässige Folie
- 42a: Einstellvorrichtung - rechts
- 42b: Einstellvorrichtung - links
- 44a: weitere Einstellvorrichtung - rechts
- 44b: weitere Einstellvorrichtung - links
- 46a: Restlichtsensor - rechts
- 46b: Restlichtsensor - links
- 48: Bildverarbeitungseinheit
- 50: Verstärkersteuerung
- 52: Bedienelement
- 54: Bandpassfilter
- 56: Signalpufferstufe, Videodetektor
- 58: Bandpassfilter und Viedeodriver
- 60: Signalweiche
- 62: Batterie
- 64: Sendeschnittstelle
- 66: Empfangsschnittstelle
- 68: Serielle Datenschnittstelle
- 70: weitere Signalpufferung für Ein- und Ausgänge
- 72: Videodriver und Signalfilter
- 74: Bedienelement
- 76: OSD Textgenerator
- 78: Kartenleser
- 80: OSD Datengenerator
- 82: Messdatenerfassung
- 84: Sensor
- 86: Sensor
- 88: Sensor
- 90: Sende- und Empfangsmittel
- 92: Sende- und Empfangsmittel - Antenne
- 94: separates Gehäuse
- 126: weitere Kamera
- 128: Wahlschalter
- 130: Stecker
- 132: Aktivierungsschalter
- 134: Bewegungssensor
- 148: Bildverarbeitungseinheit
- 150: Verstärkersteuerung
- 152: Bedienelement

- 164: Sendeschnittstelle
- 166: Empfangsschnittstelle

- 190: Sende- und Empfangsmittel
- 192: Sende- und Empfangsmittel - Antenne

## Patentansprüche

1. System mit einer elektronischen Tag-und Nachtsichtbrille (10), umfassend eine elektronische in die Brille (10) integrierte Aufnahmekamera (26) als primäres Aufnahmemittel für den Nutzer der Brille (10), welche mit einer Aufnahmeoptik und einem digitalen Bildsensor, insbesondere einem CCD/CMOS-Sensor, versehen ist, eine der Aufnahmekamera (26) nachgeschaltete Bildverarbeitungseinheit (48), welche das von der Aufnahmekamera (26) aufgenommene Bild auf elektronischem Wege weiterverarbeitet und ein Ausgangssignal für ein jedem Auge zugeordnetes Anzeigemittel (28, 30) zur Wiedergabe des Bildes zur Verfügung stellt, und eine Wiedergabeoptik (32, 34), die jedem Anzeigemittel (28, 30) nachgeschaltet ist, zumindest eine Sende- und/oder Empfangsschnittstelle (64, 66) die mit einer weiteren, von der Brille (10) separaten Tag-und Nachtsichtkamera (126) signaltechnisch verbunden ist, welche mit einem digitalen Bildsensor, insbesondere einem CCD-oder CMOS-Sensor, versehen ist, wobei über die Sende- und/oder Empfangsschnittstelle (64, 66) die Bildsignale der separaten Tag-und Nachtsichtkamera (126) dem Anzeigemittel (28, 30) zur Wiedergabe des Bildes der separaten Tag-und Nachtsichtkamera (126) zur Verfügung stellt, wobei die separaten Tag-und Nachtsichtkamera (126) mit einer Bildverarbeitungseinheit (148) versehen ist, wobei zumindest die Bildverarbeitungseinheit (148) der separaten Tag-und Nachtsichtkamera (126) nach dem digitalen Bildsensor einen Digital/Analog-Wandler aufweist, das Bildsignal danach als Analogsignal mit einem Normpegel von 1 Vss (Voltspitze - Spitze = PAL-Pegel = Videonormpegel) weiterverarbeitbar ist und bis zur Endverarbeitung im Anzeigemittel (28, 30) im wesentlichen mit analoger Technik und als analoges Signal geführt wird, sodass das von dem Benutzer bei Gebrauch der separaten Tag-und Nachtsichtkamera (126) erfassbare Bild in Echtzeit dargestellt wird, wobei die Bildverarbeitungseinheit (148) der separaten Tag-und Nachtsichtkamera (126) eine digitalisierte, dem Digital/Analog-Wandler vorgeschaltete Verstärkervorstufe (150) aufweist.

2. System nach Anspruch 1, **dadurch gekennzeichnet, dass** nach dem Bildsensor und vor dem Digital/Analog-Wandler ein digitaler Filter eingebracht ist.

3. System nach Anspruch 1 oder 2, **dadurch gekennzeichnet, dass** ein erster Wahlschalter (128) vorgesehen ist, durch den die Bildsignale wahlweise der Aufnahmekamera (26) und/oder der separaten Tag-und Nachtsichtkamera (126) dem Anzeigemittel (28, 30) zur Wiedergabe des Bildes zur Verfügung gestellt werden.

4. System nach einem der vorangehenden Ansprüche,
**dadurch gekennzeichnet, dass** die digitale Verstärkervorstufe der Bildverarbeitungseinheit (48, 148) das Signal der Aufnahmekamera (26) und/oder der separaten Talg-und Nachtsichtkamera (126) von Rausch-und Störanteilen bis in den nahen Infrarotbereich - mit einer Wellenlänge von 650 bis 1200 nm - befreit.

5. System nach einem der Ansprüche 3 oder 4,
**dadurch gekennzeichnet, dass** der erste Wahlschalter (128) manuell oder automatisch betätigbar ausgebildet ist.

6. System nach einem der Ansprüche 3 bis 5,
**dadurch gekennzeichnet, dass** der erste Wahlschalter (128) an der separaten Tag-und Nachtsichtkamera (126) angeordnet ist.

7. System nach einem der vorangehenden Ansprüche,
**dadurch gekennzeichnet, dass** die separate Tag-und Nachtsichtkamera (126) erste Sende- und Empfangsmittel (190, 192) und die Schnittstelle zweite Sende- und Empfangsmittel (90, 92) zum kabellosen Übertragen von Signalen zwischen der separaten Tag-und Nachtsichtkamera (126) und der Brille (10) aufweist.

8. System nach einem der vorangehenden Ansprüche,
**dadurch gekennzeichnet, dass** Mittel (130) zum Befestigen der separaten Tag-und Nachtsichtkamera (126) am Körper des Nutzers vorgesehen sind.

9. System nach einem der vorangehenden Ansprüche,
**dadurch gekennzeichnet, dass** die Bildsignale der Aufnahmekamera (26) und/oder der separaten Tag-und Nachtsichtkamera (126) über einen elektronischen Videosignaldetektor (56) mit Erkennungseinrichtung geführt sind, der die eingespeiste Signalart automatisch erkennt und auf die Bildverarbeitungseinheit (48) der Aufnahmekamera (26), eine Bildverarbeitungseinheit (148) der separaten Tag-und Nachtsichtkamera (126) und die Anzeigeeinheiten (28, 30) aufschaltet.

10. System nach einem der vorangehenden Ansprüche,
**dadurch gekennzeichnet, dass** die separate Tag-und Nachtsichtkamera (126) einen Aktivierungsschalter (132) aufweist, der mit einem Sensor (134), beispielsweise einem Bewegungssensor, signaltechnisch verbunden ist.

11. System nach einem der vorangehenden Ansprüche,
**dadurch gekennzeichnet, dass** die Aufnahmekamera (26) und/oder die separate Tag-und Nachtsichtkamera (126) einen CCD-Sensor oder CMOS-Sensor für den Nachtsichtbereich mit einer erhöhten Empfindlichkeit für eine Wellenlänge von 380, insbesondere 500, bis 1200 nm aufweist.

12. System nach einem der vorangehenden Ansprüche,
**dadurch gekennzeichnet, dass** die Aufnahmekamera (26) und/oder die separate Tag-und Nachtsichtkamera (126) für ein Restlicht von kleiner als 0,001 Lux, insbesondere 0,0002 Lux ohne Zusatzausleuchtung ausgelegt ist.

13. System nach einem der vorangehenden Ansprüche,
**dadurch gekennzeichnet, dass** der CCD- oder CMOS-Sensor der Aufnahmekamera (26) und/oder der separaten Tag-und Nachtsichtkamera (126) eine Bildauflösung von zumindest 790 x 590 aufweist.

14. System nach einem der vorangehenden Ansprüche,
**dadurch gekennzeichnet, dass** das Anzeigemittel (28, 30) für Schwarz/Weiß-Darstellungen ausgelegt ist, insbesondere zur Darstellung von 256 Graustufen.

15. System nach einem der vorangehenden Ansprüche,
**dadurch gekennzeichnet, dass** die Bildverarbeitungseinheit der Aufnahmekamera (26) und/oder der separaten Tag-und Nachtsichtkamera (126) zwei in Reihe geschaltete analoge Verstärkerstufen und eine Schaltung für eine Steuerspannung aufweist, welche die Verstärkerstufen bei Auslesen jedes Bildpixels - beispielsweise zeilenweise - aus dem CCD- oder CMOS-Sensor der Aufnahmekamera (26) oder der separaten Tag-und Nachtsichtkamera (126) auf "Null" eicht (DC - Off), um eine saubere Signalverarbeitung und Auslesung der Bildinformation zu gewährleisten, wobei Rauschanteile hierbei unterdrückt werden.

16. System nach Anspruch 15, **dadurch gekennzeichnet, dass** die Verstärkerstufen mit einer Signalverstärkung von mehr als 25 Dezibel, insbesondere 52 Dezibel, gegenüber dem Normpegel versehen sind.

17. System nach Anspruch 15 oder 16, **dadurch gekennzeichnet, dass** die Verstärkerstufen eine externe Beschaltung aufweisen, welche in ihrer Auslegung und Skalierung dem Signalverlauf der Verstärkung und der Übertragung für Bildinformationen im schwarz-weiß Bereich optimiert sind.

18. System nach einem der Ansprüche 15 bis 17, **dadurch gekennzeichnet, dass** den Verstärkerstufen eine Regelung für den Bereich von 5 bis 52 Dezibel zugeordnet ist, welche bei schneller Helligkeitsänderung der Umgebung die Verstärker so aussteuern, dass keine merkliche Überbelichtung des Bildes auftritt, wobei insbesondere die Regelung manuell zuschaltbar ausgebildet ist.

19. System nach einem der Ansprüche 15 bis 18, **dadurch gekennzeichnet, dass** den Verstärkerstufen eine manuell betätigte Steuerung zugeordnet ist, über welche die Empfindlichkeit der Verstärker durch den Benutzer eingestellt wird, um eine Anpassung an die Lichtverhältnisse und/oder den jeweiligen Einsatzzweck durch den Benutzer zu ermöglichen.

20. System nach einem der vorangehenden Ansprüche,
**dadurch gekennzeichnet, dass** die Verstärkerstufen eine Sample und Hold-Schaltung über einen Feldeffekttransistor zur Klemmung des Videosignals (Clamp) enthalten, die in Abhängigkeit des ankommenden Signals zeitabhängig gesteuert werden, um eine hohe Empfindlichkeit und Harmonie der Verstärkerstufen zu erreichen.

21. System nach einem der Ansprüche 15 bis 20, **dadurch gekennzeichnet, dass** dem Digital/Analog-Wandler mindestens zwei aktive Signalfilter in Form eines Bandpassfilters (54) nachgeschaltet sind, die zur Verbesserung der Bildqualität das Bildrauschen und die Falschfarbanteile zumindest unterdrücken oder beseitigen.

22. System nach Anspruch 21, **dadurch gekennzeichnet, dass** den aktiven Signalfiltern (54) eine Signalpufferstufe (56) mit einer Verstärkung, insbesondere von mehr als zwei, gegenüber dem Normalpegel nachgeschaltet ist, damit Verluste aus der vorangegangenen Signalverarbeitung und Signalführung kompensiert und ausgeglichen werden.

23. System nach einem der vorangehenden Ansprüche,
**dadurch gekennzeichnet, dass** den Anzeigemitteln ein Bandpassfilter (58) und eine Signalweiche (66) zur Impedanzanpassung vorgeschaltet ist, um eine verlustfreie Anpassung an die nachfolgende Displayelektronik zu gewährleisten.

24. System nach einem der vorangehenden Ansprüche,
**dadurch gekennzeichnet, dass** die Signalweiche (60) mit einer Signalverarbeitung zusammenwirkt, welche eine Phasengleichheit und Synchronität der dargestellten Bilder in den Anzeigemitteln ermöglicht.

## Claims

1. A system including electronic day and night vision goggles (10) which comprises an electronic recording camera (26) incorporated in said goggles (10) as primary recording means for the user of said goggles (10), said camera (26) being provided with recording optics and a digital image sensor, in particular a CCD or CMOS sensor, an image processing unit (48) connected downstream of said recording camera (26) which electronically processes the image taken by the recording camera (26) and provides an output signal to display means (28, 30) assigned to each eye for reproducing said image, and image reproduction optics (32, 34) connected downstream of each display means (28, 30), at least one transmitting and/or receiving interface (64, 66) which is electronically connected to another day and night vision camera (126) provided separately from said goggles (10) and which has a digital image sensor, in particular a CCD or CMOS sensor, in which the transmitting and/or receiving interface (64, 66) provides the image signals from the separate day and night vision camera (126) to the display means (28, 30) for reproducing the image received from the separate day and night vision camera (126), wherein said separate day and night vision camera (126) is provided with an image processing unit (148), wherein at least said image processing unit (148) of the separate day and night vision camera (126) includes a digital/analog converter connected downstream of the digital image sensor, the image signal can subsequently be processed further as an analog signal having a standard level of 1 Vss (voltage peak - peak = PAL level = standard video level) and is substantially conducted as an analog signal and using analog technology until it is finally processed in the display means (28, 30), with the result that the image which can be captured by a person using the separate day and night vision camera (126) will be displayed in real time, wherein the image processing unit (148) of the separate day and night vision camera (126) includes a digitized pre-amplifier stage (150) connected upstream of said digital/analog converter.

2. The system of claim 1 **characterized in that** a digital filter is connected downstream of said image sensor and upstream of said digital/analog converter.

3. The system of claims 1 or 2 **characterized in that** a first selector switch (128) is provided which can be used to optionally provide the image signals from either the recording camera (26) and/or the separate day and night vision camera (126) to the display means (28, 30) for image reproduction.

4. The system of one of the preceding claims **characterized in that** the digital pre-amplifier stage included in the image processing unit (48, 148) removes noise and interference up to the near infrared range - having a wavelength of between 650 nm and 1,200 nm - from the signal from the recording camera (26) and/or the separate day and night vision camera (126).

5. The system of one of claims 3 or 4 **characterized in that** said first selector switch (128) is of a type that can be actuated manually or automatically.

6. The system of one of claims 3 or 5 **characterized in that** said first selector switch (128) is provided on said separate day and night vision camera (126).

7. The system of one of the preceding claims **characterized in that** said separate day and night vision camera (126) includes first transmitting and receiving means (190, 192) and said interface includes second transmitting and receiving means (90, 92) for the wireless signal transmission between said separate day and night vision camera (126) and said goggles (10).

8. The system of one of the preceding claims **characterized in that** means (130) are provided for attaching the separate day and night vision camera (126) to a user's body.

9. The system of one of the preceding claims **characterized in that** the image signals from the recording camera (26) and/or from the separate day and night vision camera (126) are fed to an electronic video signal detector (56) including detection means which will automatically recognize the type of the signal fed in and connect it to the image processing unit (48) of the recording camera (26), an image processing unit (148) of the separate day and night vision camera (126) and the display units (28, 30).

10. The system of one of the preceding claims **characterized in that** the separate day and night vision camera (126) includes an actuation switch (132) which is electronically connected to a sensor (134) such as a motion sensor.

11. The system of one of the preceding claims **characterized in that** the recording camera (26) and/or the separate day and night vision camera (126) includes a CCD or CMOS sensor for the night vision range having increased sensitivity for a wavelength of between 380 nm, in particular 500 nm, and 1,200 nm.

12. The system of one of the preceding claims **characterized in that** the recording camera (26) and/or the separate day and night vision camera (126) are designed for operation at low light levels under 0.001 lux, in particular 0.0002 lux, without additional lighting.

13. The system of one of the preceding claims **characterized in that** the image resolution of the CCD or CMOS sensor of the recording camera (26) and/or of the separate day and night vision camera (126) is at least 790 x 590.

14. The system of one of the preceding claims **characterized in that** the display means (28, 30) is designed for black and white images, in particular for displaying 256 shades of gray.

15. The system of one of the preceding claims **characterized in that** the image processing unit of the recording camera (26) and/or of the separate day and night vision camera (126) includes two series-connected analog amplifier stages and a circuit for a control voltage which calibrates said pre-amplifier stages to "zero" (DC - off) as each image pixel is being read out, for example line by line, of the CCD or CMOS sensor of the recording camera (26) or the separate day and night vision camera (126) so as to ensure proper signal processing and readout of the image information, at the same time suppressing any noise.

16. The system of claim 15 **characterized in that** the amplifier stages feature a signal amplification of more than 25 decibels, in particular 52 decibels, compared to the standard level.

17. The system of one of claims 15 or 16 **characterized in that** the amplifier stages include external circuits which have been optimally designed and scaled with respect to the signal course of the amplification and the transmission for image information in the black-and-white range.

18. The system of one of claims 15 to 17 **characterized in that** the amplifier stages have associated controllers for the 5 to 52 decibel range which, in the case of a fast change of brightness in the environment, will control the amplifiers such that any noticeable image overexposure will be prevented, with said controller being in particular provided such that it can be manually switched.

19. The system of one of claims 15 to 18 **characterized in that** the amplifier stages have an allocated manually actuated controller which the user uses to set the sensitivity of the amplifiers so as to enable the user to adapt the system to the lighting conditions and/or the intended application in each case.

20. The system of one of the preceding claims **characterized in that** the amplifier stages include a sample-and-hold circuit via a field effect transistor for clamping the video signal (Clamp) which elements are controlled in a time-dependent way as a function of the incoming signal so as to accomplish a high degree of sensitivity and harmony of the amplifier stages.

21. The system of one of claims 15 to 20 **characterized in that** connected downstream of said digital/analog converter are at least two active signal filters in the form of a band pass filter (54) which will remove or at least suppress image noise and false color components so as to improve image quality.

22. The system of claim 21 **characterized in that** connected downstream of said active signal filters (54) is a signal buffer stage (56) having an amplification, in particular of more than two, compared to the standard level so as to be able to compensate and make up for losses from previous signal processing and signal feed.

23. The system of one of the preceding claims **characterized in that** connected upstream of said display means are a band pass filter (58) and a signal splitter (66) for impedance adaptation so as to ensure loss-free adaptation to the subsequent electronic display components.

24. The system of one of the preceding claims **characterized in that** the signal splitter (60) will cooperate with a signal processing unit which makes it possible to ensure that the images displayed by the display means are in phase and synchronous.

## Revendications

1. Système avec des lunettes de vision nocturne et diurne (10), comprenant une caméra électronique (26) intégrée aux lunettes (10) comme dispositif d'enregistrement primaire pour l'utilisateur des lunettes (10), laquelle est pourvue d'un système d'enregistrement optique et d'un capteur d'images digital, plus particulièrement d'un capteur CCD/CMOS; une unité de traitement d'images (48) en aval de la caméra (26), laquelle traite électroniquement l'image enregistrée par la caméra (26) et envoyant un signal de sortie à un élément d'affichage (28, 30) assigné à chaque oeil afin d'y rendre l'image et un système de reproduction optique (32, 34) en aval de chaque élément d'affichage (28, 30); au moins une interface d'émission ou réception (64, 66) reliée par signaux à une caméra de vision nocturne et diurne (126) séparée des lunettes (10) et pourvue d'un capteur d'images digital, plus particulièrement d'un capteur CCD/CMOS, où, par l'interface d'émission ou réception (64, 66), les signaux d'images captés par la caméra séparée (126) sont envoyés à l'élément d'affichage (28, 30) en vue d'y rendre les images de la caméra séparée (126), où la caméra séparée (126) est équipée une unité de traitement d'images) (148), où au moins l'unité de traitement d'images (148) de la caméra séparée (126) présente, après le capteur d'images digital, un convertisseur digital-analogue; le signal d'image peut ensuite être traité en tant que signal analogue avec un niveau standardisé de 1 VCC (volt crête à crête = niveau standardisé PAL = niveau standardisé pour les vidéos) puis transmis en tant que signal analogue avec essentiellement une technologie analogue jusqu'au traitement final dans l'élément d'affichage (28, 30), de façon à ce que l'image saisissable par l'utilisateur lorsqu'il utilise la caméra séparée (126) soit rendue en temps réel, où l'unité de traitement d'images (148) de la caméra séparée (126) présente un stade préliminaire amplificateur (150) digitalisé en aval du convertisseur digital-analogue.

2. Système selon la revendication 1, **caractérisé en ce qu'**un filtre digital est disposé entre le capteur d'images et le convertisseur digital-analogue.

3. Système selon les revendications 1 ou 2, **caractérisé en ce qu'**un premier commutateur (128) est en place, par lequel les signaux d'images soit de la caméra (26) ou soit de la caméra séparée (126) sont mis à disposition de l'élément d'affichage (28, 30) afin d'y rendre l'image.

4. Système selon l'une des revendications précédentes, **caractérisé en ce que** le stade préliminaire amplificateur de l'unité de traitement d'images (48, 148) libère le signal de la caméra (26) ou de la caméra séparée (126) des composantes sonores et perturbatrices jusque dans la plage proche des infrarouges - avec une longueur d'ondes de 650 à 1200 nm.

5. Système selon les revendications 3 ou 4, **caractérisé en ce que** le premier commutateur (128) est formé de façon à ce qu'il puisse être actionné manuellement ou automatiquement.

6. Système selon l'une des revendications 1 à 5, **caractérisé en ce que** le premier commutateur (128) est assigné à la caméra séparée (126).

7. Système selon l'une des revendications précédentes, **caractérisé en ce que** la caméra séparée (126) est doté du premier dispositif d'émission/réception (190, 192) et l'interface est dotée du deuxième dispositif d'émission/réception (90, 92) en vue de la transmission sans fil de signaux entre la caméra séparée (126) et les lunettes (10).

8. Système selon l'une des revendications précédentes, **caractérisé en ce qu'**un dispositif (130) de fixation de la caméra séparée (126) au corps de l'utilisateur est en place.

9. Système selon l'une des revendications précédentes, **caractérisé en ce que** les signaux d'image de la caméra (26) ou de la caméra séparée (126) sont acheminés par un détecteur de signaux vidéos (56) avec un dispositif de reconnaissance qui reconnaît automatiquement le type de signal reçu et qui se branche à l'unité de traitement d'images (48) de la caméra (26), à une unité de traitement d'images (148) de la caméra séparée (126) et aux éléments d'affichage (28, 30).

10. Système selon l'une des revendications précédentes, **caractérisé en ce que** la caméra séparée (126) dispose d'un commutateur d'activation (132) relié par signaux à un capteur (134), par exemple un capteur de mouvement.

11. Système selon l'une des revendications précédentes, **caractérisé en ce que** la caméra (26) ou la caméra séparée (126) dispose d'un capteur CCD ou CMOS pour la vision nocturne avec une sensibilité augmentée pour une longueur d'ondes de 380, plus particulièrement de 500 et pouvant atteindre 1200 nm.

12. Système selon l'une des revendications précédentes, **caractérisé en ce que** la caméra (26) ou la caméra séparée (126) est conçue pour une lumière résiduelle de moins que 0,001 Lux, plus particulièrement 0,0002 Lux sans éclairage supplémentaire.

13. Système selon l'une des revendications précédentes, **caractérisé en ce que** le capteur CCD ou CMOS de la caméra (26) ou de la caméra séparée (126) présente une résolution d'image d'au moins 790 x 590.

14. Système selon l'une des revendications précédentes, **caractérisé en ce que** l'élément d'affichage (28, 30) est conçu pour rendre les images en noir et blanc, plus particulièrement pour l'affichage de 256 niveaux de gris.

15. Système selon l'une des revendications précédentes, **caractérisé en ce que** l'unité de traitement d'images de la caméra (26) ou de la caméra séparée (126) dispose de deux étages amplificateurs analogues branchés en série et une connexion pour une tension de commande, lequel calibre à « zéro » (CD - Off) tout pixel de l'image- par exemple par lignes - en provenance du capteur CCD ou CMOS de la caméra (26) ou de la caméra séparée (126) lors de la lecture afin de permettre un bon traitement du signal et lecture de l'information de l'image, les composantes de bruit étant étouffées à ce moment.

16. Système selon la revendication 15, **caractérisé en ce que** les étages amplificateurs sont pourvus d'une amplification du signal de plus de 25 décibels et plus particulièrement de 52 décibels par rapport au niveau standardisé.

17. Système selon l'une des revendications 15 à 16, **caractérisé en ce que** les étages amplificateurs présentent un circuit de protection externe, lequel est optimisé de par son dimensionnement et sa graduation pour les formes d'onde de signal de l'amplification et du transfert d'informations d'image en noir et blanc.

18. Système selon l'une des revendications 15 à 17, **caractérisé en ce que** les étages amplificateurs disposent d'un réglage pour la plage entre 5 et 52 décibels, lequel ajuste les amplificateurs en cas de changement rapide du niveau de clarté environnant de façon à ce que ne survienne aucune surexposition perceptible de l'image, où, plus particulièrement, le réglage peut être connectée manuellement.

19. Système selon l'une des revendications 15 à 18, **caractérisé en ce que** les étages amplificateurs sont munis d'une commande activée manuellement par laquelle la sensibilité des amplificateurs est réglée par l'utilisateur afin de permettre un ajustement aux conditions d'éclairage ou à l'objectif d'usage par l'utilisateur.

20. Système selon l'une des revendications précédentes, **caractérisé en ce que** les étages amplificateurs contiennent un circuit sample and hold basé sur un transistor à effet de champ en vue du verrouillage du signal vidéo (clamp) commandé en fonction du temps du signal arrivant afin d'atteindre un haut niveau de sensibilité et d'harmonie des étages amplificateurs.

21. Système selon l'une des revendications 15 à 20, **caractérisé en ce qu'**au moins deux filtres de signaux sont branchés en aval du convertisseur digital-analogue sous la forme d'un filtre passe-bande (54), lesquels améliorent la qualité de l'image au moins en réduisant ou en éliminant les perturbations et les mauvaises proportions de couleur.

22. Système selon la revendication 21, **caractérisé en ce qu'**un étage séparateur de signal (56) est situé en aval des filtres à signal actifs (54) avec un gain, plus particulièrement supérieur à deux par rapport au niveau standardisé afin de compenser et d'équilibrer les pertes résultant du traitement et transfert de signaux précédents.

23. Système selon l'une des revendications précédentes, **caractérisé en ce qu'**un filtre passe-bande (58) et un séparateur de signaux (66) pour l'harmonisation d'impédance sont situés en aval des éléments d'affichage afin de garantir un ajustement au module d'affichage électronique subséquent sans encourir de pertes.

24. Système selon l'une des revendications précédentes, **caractérisé en ce que** le séparateur de signaux (60) agit en synergie avec un traitement du signal, lequel permet une régularité des phases et une synchronisation des images rendues dans les éléments d'affichage.
